# EUROPEAN PATENT SPECIFICATION

(11) **EP 2 236 190 B1**
(45) Date of publication and mention of the grant of the patent: **19.06.2013**
(21) Application number: 10250557.5
(22) Date of filing: 24.03.2010
(51) Int. Cl.: B01D 46/24

(54) **Honeycomb filter and manufacturing method of the same**
Wabenfilter und Herstellungsverfahren dafür
Filtre en nid d'abeille et son procédé de fabrication

(30) Priority: 25.03.2009 JP 2009073872
(43) Date of publication of application: 06.10.2010
(73) Proprietor: NGK Insulators, Ltd., Nagoya City, Aichi Pref. (JP)
(72) Inventor: Kentaro Sugimoto, Nagoya City Aichi-ken, 467-8530 (JP)
(74) Representative: Paget, Hugh Charles Edward

(56) References cited:
- EP-A1- 1 125 704
- EP-A1- 1 493 479
- WO-A1-2006/114345

## Description

### BACKGROUND OF THE INVENTION

### 1. Field of the Invention

The present invention relates to a honeycomb filter which collects particulate matters in an exhaust gas, and a manufacturing method of the honeycomb filter.

### 2. Description of the Related Art

Heretofore, a honeycomb structure has broadly been used as a carrier of a catalyst for purifying an exhaust gas discharged from various types of internal combustion engines, typified by an automobile exhaust gas, or a carrier of a deodorizing catalyst. When such a honeycomb structure is used as, for example, the carrier of the catalyst for purifying the automobile exhaust gas, partition walls for partitioning cell passages are generally formed into a planar shape so as to decrease a pressure loss.

However, with the strengthening of regulations on the exhaust gas in the background of an environmental problem, a purification performance of the automobile exhaust gas purifying catalyst is considered to be more important rather than a pressure loss performance thereof. Therefore, the development of an engine for decreasing emissions of harmful substances such as hydrocarbons (HC), carbon monoxide (CO) and nitrogen oxides (NOx) and the improvement of a three way catalyst as the present mainstream have proceeded, and their effects tend to decrease the emissions of the harmful substances.

In this way, the entire emissions during the operation of the engine have been decreased. On the other hand, the amount of the harmful substances discharged immediately after the start of the engine has been highlighted. In, for example, an FTP-75 cycle as a U.S. regulated running cycle, the amount of the harmful substances discharged in a cold-transient mode for 140 seconds immediately after the start of the engine and in the whole running cycle is from 60 to 80% of the total amount of the harmful substances. One of causes for this amount is that the temperature of the exhaust gas is low immediately after the start of the engine, and hence the catalyst is not sufficiently activated, so that the harmful substances pass through the catalyst without being purified. Another cause is that immediately after the start of the engine, the burning state of a fuel is not stabilized, and an air-fuel ratio (A/F) of the exhaust gas as an important factor which influences the purification performance of the three way catalyst, that is, the ratio of the amount of oxygen in the exhaust gas fluctuates. To solve this problem, contrivances have been made. That is, to rapidly raise the temperature of the catalyst immediately after the start of the engine, the position of the catalyst is brought as close as possible to the engine, and the catalyst is disposed in a place where the temperature of the exhaust gas is high. To decrease the heat capacity of the honeycomb catalyst carrier itself, the thicknesses of the partition walls of the cells are decreased. To rapidly absorb the heat of the exhaust gas and to increase a contact area between the catalyst and the exhaust gas, the cell density of the carrier is increased.

However, in most of conventional ordinary honeycomb structures, for a purpose of the decrease of the pressure loss, the partition walls are formed into the planar shape so that cell passages have a straight tubular shape. Therefore, the honeycomb structures are contrived by decreasing the thicknesses of the partition walls and increasing the number of the cells, to increase the contact area between the partition walls and the exhaust gas. However, there is a restriction on the increase of the contact area. Moreover, even if the contact area is increased, any sufficient purification effect is not seen depending on the harmful components of the exhaust gas. Thus, there has been a limit to the improvement of the purification performance. Furthermore, when the amount of the catalyst to be loaded is increased for the improvement of the purification performance, a large amount of platinum as an expensive catalyst component is used, which incurs not only the increase of cost but also the increase of the thickness of a catalyst layer. In consequence, the ratio of the catalyst which can actually sufficiently come in contact with the exhaust gas decreases, and hence the expected improvement of the purification performance is not obtained. Moreover, the initial performance of the catalyst becomes high, but noble metals more closely gather, and the catalysts easily agglomerate with an elapse of time, which causes a problem that the lifetime of the honeycomb structure shortens.

To solve such a problem, there have been developed a honeycomb structure in which wall surface portions are formed into a wavelike shape in both of a cell passage direction and a sectional direction vertical to the cell passage direction to increase a filter area, thereby improving a purification efficiency; and another honeycomb structure in which cells having different sectional areas are alternately arranged so that cells disposed on an inlet side have large sectional areas, to increase the amount of deposits such as soot and an unburnt substance of an engine oil, thereby lengthening a regeneration cycle. However, when these honeycomb structures are used as honeycomb filters, new problems occur as follows, and any sufficient countermeasure is not taken.

For example, in the former honeycomb structure in which the wall surface portions are formed into the wavelike shape in both of the cell passage direction and the sectional direction vertical to the cell passage direction, the structural strength of the whole honeycomb structure, especially an A-axis compressive strength thereof, noticeably lowers owing to the cell shape of the structure. Moreover, the complexity of forming processability by the combination of a wavelike structure and the decrease of a yield due to the complexity might be caused. In the latter honeycomb structure, since the filter area decreases, the pressure loss increases, cracking easily occurs, and the purification efficiency or regeneration efficiency easily decreases. Therefore, the pressure loss is not decreased while increasing the filter area, and it cannot help but be considered that these honeycomb structures are insufficient.

Moreover, in recent years, still another honeycomb structure has been developed in which wall surfaces in a cell through channel direction and cells in a cell sectional direction are formed into a wavelike shape to increase a surface area. However, in such a wave type structure, the structural strength of the whole honeycomb structure, especially the A-axis compressive strength, noticeably easily decreases. Moreover, the decrease of the yield due to the complexity of the forming processability easily occurs, and hence it cannot help but be considered that this honeycomb structure is also insufficient. A further improvement is demanded.

There are Patent Documents 1 to 3 for solving such problems as follows.

In Patent Document 1, there is disclosed a honeycomb structure having a plurality of cell passages parallel to one another in a passage direction for the purposes of the improvement of the performance of purifying an exhaust gas or the performance of a catalyst, the improvement of a mechanical strength against canning and the improvement of a resistance to thermal shock. Intersections of the partition walls which partition the cell passages are formed at regular positions while keeping a predetermined pitch in the cross section of the honeycomb structure vertical to the cell passages. Moreover, wall surface portions of the honeycomb structure excluding the intersections are formed into a wavelike shape in both of the cell passage direction and the sectional direction vertical to the cell passage direction. In this honeycomb structure, the wall surfaces in the cell through channel direction and the cells in the cell sectional direction are formed into the wavelike shape to increase a contact area between the honeycomb structure and the exhaust gas, thereby increasing the surface area of the structure.

In Patent Documents 2 and 3, cells having different sectional areas are alternately arranged, and cells having large sectional areas are disposed on an inlet side of each honeycomb structure, whereby the amount of deposits such as soot and unburnt substances of an engine oil can be increased, to lengthen a cycle for performing regeneration.

[Patent Document 1] JP-A-2001-520273
[Patent Document 2] JP-A-2005-270969
[Patent Document 3] JP-A-2004-571942

### SUMMARY OF THE INVENTION

The wave type structure disclosed in Patent Document 1 can constantly be evaluated in that the surface area of the structure is increased. However, wall surface portions are formed into a wavelike shape in both of a cell passage direction and a sectional direction vertical to the cell passage direction. Therefore, it is feared that the structural strength of the whole honeycomb structure, especially the A-axis compressive strength thereof, might noticeably lower and that a yield might lower owing to the complexity of forming processability. Furthermore, the optimum range of the wavelike shape disclosed in the document is not clear. A pressure loss cannot be decreased while increasing a filter area, and hence it cannot help but be considered that the structure is insufficient.

Moreover, in a honeycomb structure in which cells having different sectional areas are alternately arranged as in Patent Documents 2 and 3, cells having large sectional areas are disposed on an inlet side, to increase the amount of deposits such as soot and unburnt substances of an engine oil, whereby the increase of the pressure loss due to the increase of the amount of the deposits can be suppressed, thereby lengthening a cycle to perform regeneration. However, the filter area does not increase, and the value of the pressure loss does not decrease.

The present invention has been developed to solve such problems, and investigations have been repeated to provide a honeycomb filter constituted of a honeycomb structure comprising a large number of cells which become passages for an exhaust gas partitioned by partition walls and having large and small sectional areas of the cells, and having a constitution of the honeycomb filter provided with plugging portions which alternately plug open ends of the large number of cells and comprising wave type cells each having facing surfaces or regions thereof formed into a wavelike shape with an equal wavelength in a passage direction of the cells, whereby a pressure loss can be decreased while increasing a filter area, and to provide a manufacturing method of the honeycomb filter. Above all, the decrease of the pressure loss involving the increase of the filter area and the increase of a regeneration efficiency by a shortened regeneration time can be realized, and the structural strength of the whole honeycomb structure can be maintained. Moreover, the honeycomb filter can easily be formed, and a yield can further be improved.

A honeycomb filter comprising: a honeycomb structure having a large number of cells which become passages for an exhaust gas partitioned by partition walls and having large and small sectional areas of the cells, and plugging portions alternately plugged at open ends of the large number of cells, wherein the large number of cells include wave type cells each having a pair of facing surfaces or regions thereof formed into a wavelike shape with an equal wavelength in a passage direction of the cells.

The honeycomb filter according to the above [1], wherein the wave type cells are formed into the wavelike shape with an equal amplitude in the cell passage direction.

The honeycomb filter according to the above [1] or [2], wherein all the cells are formed into the wavelike shape with an equal cycle in the cell passage direction.

The honeycomb filter according to any one of the above [1] to [3], wherein the amplitude of each of the wave type cells is from 150 to 350% of the thickness of each of the partition walls.

The honeycomb filter according to any one of the above [1] to [4], wherein the wavelength of each of the wave type cells is from 5 to 9.5 times the thickness of each of the partition walls.

The honeycomb filter according to any one of [1] to [5], wherein the upstream-side open sectional areas of the wave type cells are larger than the outlet-side open sectional areas thereof.

The honeycomb filter according to any one of the above [1] to [6], wherein the wave type cells are constituted of a combination of alternately disposed quadrangular and octagonal cells.

The honeycomb filter according to any one of the above [1] to [7], wherein the outer peripheral portion of the honeycomb structure is formed into a concave/convex shape corresponding to the wavelike shape of the wave type cells.

The honeycomb filter according to any one of the above [1] to [8], wherein the outer peripheral portion of the honeycomb structure is formed into a thick or thin planar shape corresponding to the wavelike shape of the wave type cells.

A method for manufacturing the honeycomb filter according to any one of the above [1] to [9], comprising: adjusting an extrusion speed during extrusion of a forming material containing a ceramic material to form wave type cells so that an only pair of facing surfaces of each cell have a wavelike shape with an equal wavelength in a through channel direction.

When the honeycomb filter according to the present invention is applied as a DPF, effects are produced as follows.

The honeycomb filter according to the present invention is constituted of the honeycomb structure comprising a large number of cells which become passage for the exhaust gas partitioned by the partition walls and having the large and small sectional areas of the cells, and the honeycomb filter has the constitution provided with the plugging portions which alternately plug the open ends of the large number of cells and comprising the wave type cells each having an only pair of facing surfaces thereof formed into the wavelike shape with the equal wavelength in the passage direction of the cells. In consequence, there can be produced an excellent effect that the honeycomb filter which can decrease a pressure loss while increasing a filter area and the manufacturing method of the honeycomb filter can be provided. Above all, the decrease of the pressure loss involving the increase of the filter area and the improvement of a regeneration efficiency by the shortened regeneration time can be realized, and the structural strength of the whole honeycomb structure can be maintained. Moreover, the honeycomb filter can easily be formed. Furthermore, a yield can be improved.

### BRIEF DESCRIPTION OF THE DRAWINGS

Fig. 1 is a partially omitted perspective view schematically showing one embodiment of a honeycomb filter according to the present invention;
Fig. 2 is a partially enlarged plan view schematically showing the end face of the honeycomb filter of Fig. 1;
Fig. 3 is a sectional view schematically showing the honeycomb filter of Fig. 1 cut along a length direction thereof;
Fig. 4 is a partially enlarged sectional view of Fig. 3, schematically showing one example of a wave type cell;
Fig. 5A is a partially enlarged perspective view schematically showing a large cell of Fig. 2 in a vertically rotated horizontal direction of a sheet surface of Fig. 2;
Fig. 5B is a partially enlarged perspective view schematically showing a small cell of Fig. 2 in a vertically rotated horizontal direction of a sheet surface of Fig. 2;
Fig. 6A is a sectional view of another embodiment of the honeycomb filter according to the present invention cut along a length direction of the honeycomb filter, and a diagram schematically showing the honeycomb filter having an outer peripheral portion thereof which is not coated with a coat material;
Fig. 6B is a sectional view of still another embodiment of the honeycomb filter according to the present invention cut along the length direction of the honeycomb filter, and a diagram schematically showing the honeycomb filter having the outer peripheral portion thereof which is coated with a coat material and which is formed into a concave/convex shape;
Fig. 7A is a schematic sectional view showing schematic constitution and structure of a die used for extrusion-forming a honeycomb structure which is a base member of the present invention; and
Fig. 7B is a partially enlarged plan view schematically showing the end face of a honeycomb filter according to a further embodiment of the present invention.

### [Description of Reference Numerals]

1: honeycomb filter, 2a, 2b: end face, 3: cell (wave type cell), 3a: large cell (octagonal cell, exhaust gas inflow cell), 3b: small cell (quadrangular cell, exhaust gas outflow cell), 4: partition wall, 4a: (not-wavelike) surface (partition wall surface), 4b: (wavelike) surface (partition wall surface), 7a: peak (of wave type cell), 7b: bottom (of wave type cell), 10: plugging portion, 11: open end, 11a: upstream-side (exhaust gas inflow side) open end, 11b: downstream-side (exhaust gas outflow side) open end, 20: outer peripheral wall (outer peripheral coat layer), 25: outer peripheral wall (outer peripheral coat layer), 50: die, 51: back plate, 52: through hole, 53: back hole, 54: back hole passage member, 55: slit, 56: slit member, T: region, U: region, W: region, R: distance (depth) between peak (of wave type cell) and bottom (of wave type cell), and Z: region.

### DESCRIPTION OF THE PREFERRED EMBODIMENT

Hereinafter, an embodiment of a honeycomb filter of the present invention will specifically be described. However, the present invention broadly includes a honeycomb filter including specific matters of the present invention, and is not limited to the following embodiment.

### [1] Honeycomb Filter of the Present Invention

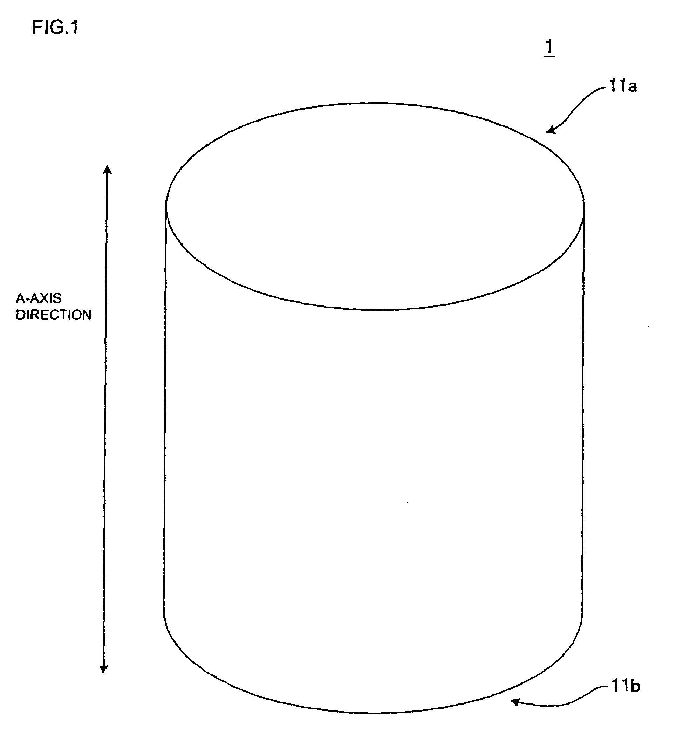

As shown in Figs. 1 to 4, a honeycomb filter of the present invention has a constitution of a honeycomb filter 1 constituted of a honeycomb structure comprising a large number of cells 3 (3a, 3b) which become passages for an exhaust gas partitioned by partition walls 4 and having large and small sectional areas of the cells, provided with plugging portions 10 which alternately plug open ends 11 of the large number of cells 3, and comprising wave type cells 3 each having an only pair of facing surfaces 4b, 4b or regions (the regions of the surfaces 4b and 4c) thereof formed into a wavelike shape with an equal wavelength in a passage direction of the cells 3.

### [1-1] Wave type cell:

The wave type cells formed in the honeycomb filter of the present embodiment preferably become passages (through channels) for an exhaust gas partitioned by partition walls, and have large and small cell sectional areas. Moreover, in the honeycomb filter of the present embodiment, an only pair of facing surfaces or regions of each cell are preferably formed into a wavelike shape with an equal wavelength in a passage direction (a through channel direction). In this way, while the cells have large and small sectional areas, the only pair of facing surfaces of each cell are formed into the wavelike shape with the equal wavelength in the through channel direction. In consequence, the cells have a waveform in the cell passage direction, and hence the filter area which can be subjected to a purification treatment can be increased as compared with a conventional constitution in which the cell passage direction linearly extends along the axial direction of the honeycomb filter.

Here, in a general honeycomb filter, (1) a constitution in which cells have an equal sectional area or (2) a constitution in which cells are linearly formed in a through channel direction is seen. However, in such a constitution, the filter area cannot be increased, and it is difficult to improve a purification efficiency or a regeneration efficiency. Above all, in the honeycomb filter (1), the passage speed of the exhaust gas passing through the filter tends to lower in a region (the cells on an exhaust gas inflow side) in the vicinity of the upstream-side end face of the honeycomb filter as compared with a region in the vicinity of the downstream-side end face thereof. In consequence, a contact area between the exhaust gas (especially soot or the like included in the exhaust gas) and the partition walls in the upstream-side cells, the whole area of the filter is not sufficient, and it cannot easily be considered that the purification efficiency is sufficient.

Therefore, in the conventional honeycomb filters disclosed in the above prior documents for solving such problems, there is seen (3) a constitution comprising wave type cells formed into a wavelike sectional shape in the open frontal area of the honeycomb filter, that is, the partition walls of the cross sections of the cells and also formed into a wavelike shape in a through channel direction. Moreover, there is also seen (4) a constitution in which while the partition walls of the cross sections of the cells are linearly formed, the sectional areas of the adjacent cells are increased or decreased to increase the filter area. However, in the conventional honeycomb filter having the above constitution (3), the partition walls of the cross sections of the cells in the open frontal area of the filter are formed into the wavelike shape, and the partition walls are also formed into the wavelike shape in the through channel direction, which causes a problem that an A-axis compressive strength lowers. In addition, a problem occurs that the pressure loss increases owing to the increase of a permeability. Moreover, when all the partition walls of the cross sections of the cells are formed into the wavelike shape and the partition walls are also formed into the wavelike shape in the through channel direction, forming processing is complicated, and the decrease of a yield is incurred. Here, also in the wave type cells of the honeycomb filter having the constitution (3) in the region of the filter in the vicinity of the upstream-side end face thereof, the passage speed of the exhaust gas passing through the honeycomb filter is controlled so that soot or the like easily permeates the partition walls, thereby increasing the filter area. However, in the honeycomb filter having the constitution (3), a stress or the like becomes excessively large when the exhaust gas comes in contact with the wave type cells formed irregularly into the wavelike shape, and the decreasing of the pressure loss cannot be realized. Moreover, as to such conventional wave type cells, open ends, that is, the cross sections of the cells are formed into the wavelike shape as described above, whereby at an inlet of the end face of the filter on the inflow side of the exhaust gas and in the vicinity of the inlet, an excessively large stress easily occurs, and the A-axis compressive strength noticeably lowers.

On the other hand, according to the above constitution of the honeycomb filter of the present embodiment, the cross sections of the cells in the end face of the filter on an inflow/outflow side are not formed into the wavelike shape, and the sectional areas of the cells are increased or decreased, whereby the cells are formed into the wavelike shape only in the length direction thereof. Therefore, the inflow speed of the exhaust gas can appropriately be controlled, and the permeation of the exhaust gas through the partition walls can appropriately be improved over the upstream and downstream sides. Therefore, the filter area can be increased, and the purification efficiency can be improved. Moreover, since the cells on the inflow side of the exhaust gas do not have any wavelike sectional shape. Therefore, even if the cells are formed into the wavelike shape in the length direction thereof, the A-axis compressive strength does not noticeably decrease, and the pressure loss can be decreased.

Furthermore, in the honeycomb filter of the present embodiment, according to a structure in which the inflow speed of the exhaust gas can appropriately be controlled so that the exhaust gas waves in the through channel direction in the pair of facing wall surfaces or regions of each cell, the flow of the gas can be disturbed, whereby contact between the gas and the soot can be increased to raise a burning speed, thereby shortening a regeneration time. Furthermore, there are merits such as the decrease of fuel consumption and the lengthening of a regeneration interval in continuous regeneration.

Above all, in the honeycomb filter of the present embodiment, an only pair of facing surfaces or regions of each cell are formed into the wavelike shape, and the cross sections of the cells crossing the length direction at right angles are not formed into the wavelike shape of the wave type cells. Therefore, the facilitating of the forming can improve the yield. In addition, even in a case where the honeycomb filter of the present embodiment in which the soot is deposited is used as a DPF, the pressure loss (the pressure loss due to the deposited soot) can be decreased while improving the purification efficiency. When the honeycomb filter is used as a DPF carrier having a total length of up to 190.5 mm, a pressure loss due to passage through the walls is a dominant pressure loss, and hence the wave type cells further easily exert an effect.

However, when a honeycomb filter having a length larger than the above length is used (formed) as the DPF, the pressure loss which might occur in the honeycomb filter also includes the pressure loss during the passage of the exhaust gas through the cell passages. In consequence, even according to the wave type cells of the honeycomb filter of the present embodiment, the pressure loss of the whole honeycomb filter is not easily decreased.

Here, "the A-axis compressive strength" is the compressive strength in a direction parallel to the through channels of the honeycomb structure as regulated in JASO M505-87 (Test Method of Ceramic Monolith Carrier for Automobile Exhaust Gas Purifying Catalyst). The measurement method of this A-axis compressive strength conforms to JASO M505-87. If the honeycomb structure has, for example, a cell wall thickness of 12 mil and a cell pitch of 200 cpsi, a columnar test piece having a length of 25.4 mm in an A-axis direction and a diameter of 25.4 mm in a direction perpendicular to this A-axis direction is cut out of the honeycomb structure, and the strength is measured using an autograph by a compressive test in the A-axis direction to obtain the compressive strength of the test piece. It is to be noted that this "A-axis compressive strength" is specifically the compressive strength in "the A-axis direction" shown in Fig. 1.

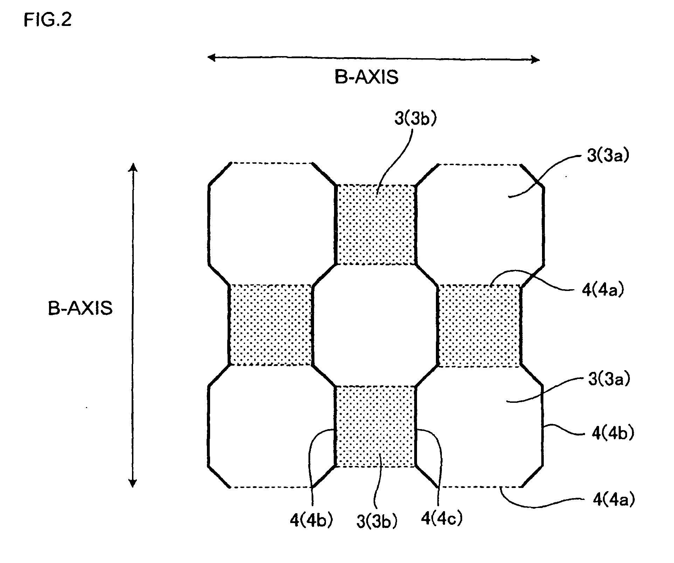

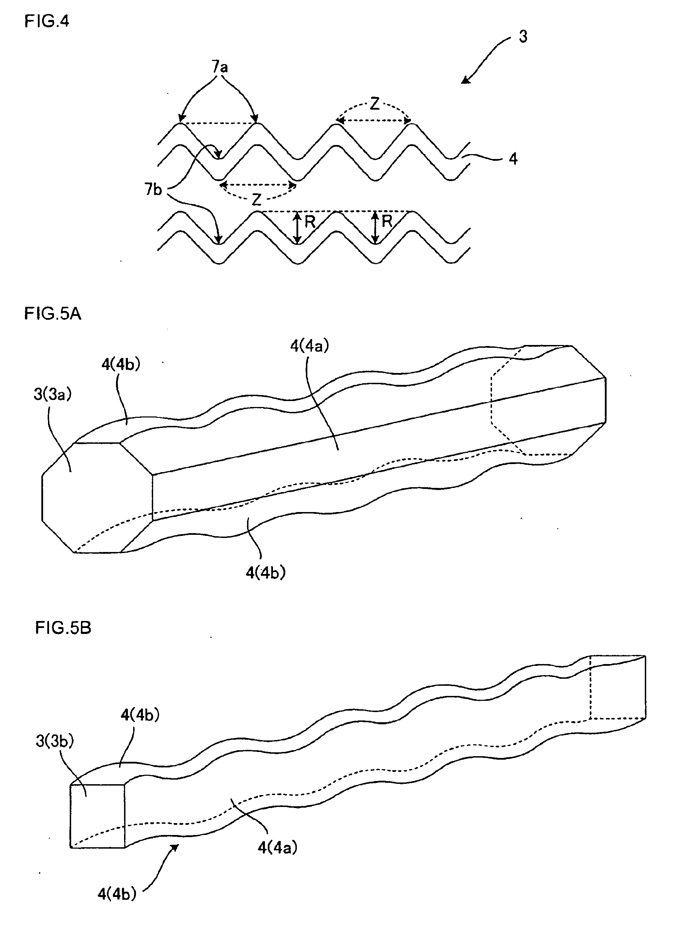

Moreover, "the only pair of facing surfaces or regions of each cell are formed into the wavelike shape in the through channel direction" means that the partition walls are formed into the wavelike shape in the through channel direction thereof in only pair of facing surfaces of the partition walls which form the cell. Alternatively, it is meant that the partition walls are formed into the wavelike shape in the through channel direction thereof in the only pair of facing surfaces of the partition walls which form the cell and regions including a surface in the vicinity of the pair of surfaces. For example, as to quadrangular cells 3b shown in Fig. 2, it is meant that as shown in Figs. 2 and 5B, only facing partition wall surfaces 4b, 4b are formed into the wavelike shape among four surfaces which form the quadrangular cell 3b. Alternatively, it is meant that among four surfaces which form the quadrangular cell 3b, the only facing partition wall surfaces 4b, 4b and surfaces 4c, 4c in the vicinity of the partition wall surfaces 4b, 4b are formed into the wavelike shape. Moreover, in a case where the partition wall surfaces 4b, 4b are formed into the wavelike shape, it is meant that the other partition wall surfaces 4a, 4a are not formed into the wavelike shape. Moreover, as to an octagonal cell shown in Fig. 2, it is meant that as shown in Figs. 2 and 5A, only facing partition wall surfaces 4b, 4b among eight surfaces which form the octagonal cell, or the facing partition wall surfaces 4b, 4b among the eight surfaces which form the octagonal cell and the surfaces 4c, 4c in the vicinity of the partition wall surfaces 4b, 4b are formed into the wavelike shape. Moreover, in a case where the only partition wall surfaces 4b, 4b are formed into the wavelike shape, it is meant that the other partition wall surfaces 4a, 4a are not formed into the wavelike shape. In other words, it is meant that the cell forming partition wall surfaces other than the pair of facing surfaces are not formed into the wavelike shape.

However, this pair of partition wall surfaces are not limited to the horizontal direction of the quadrangular cell shown in Fig. 2, and the horizontal direction of the octagonal cell. The surfaces may be formed along the vertical direction of the quadrangular cell or the octagonal cell. Additionally, in the present embodiment, since the honeycomb filter has "large and small sectional areas of the cells", the wave type cells formed in the large and small cells are preferably formed into the wavelike shape with an equal wavelength in the passage directions of the large and small cells, respectively. In the whole honeycomb filter, the pressure loss can be decreased, and the A-axis compressive strength does not easily lower.

Moreover, "the wavelike shape" means a wavy line from the peak to the bottom of a wave. In the present embodiment, "the wavy line from the peak to the bottom of the wave" as "this wavelike shape" is preferably repeatedly formed at least once in the through channel direction. Moreover, "the only pair of facing surfaces of the cell are formed into the wavelike shape with the equal wavelength in the through channel direction" means that the wavy line from the peak to the bottom of the wave has an equal length and that the peak of the wave has the same shape as that of the bottom thereof. In this "wave type cell" in which "the only pair of facing surfaces of the cell are formed into the wavelike shape with the equal wavelength in the through channel direction", for example, the origin (starting point) of the cell provided with a pair of facing surfaces starts from the peak (or the bottom) of the wave, and is formed at least once.

Specifically, as shown in Fig. 4, peaks 7a of the wave (the wave type cell) are regions which become the top of the wavelike cell shape. Moreover, bottoms 7b of the wave (the wave type cell) are regions which become the bottom of the wavelike cell shape.

Moreover, the wave type cells formed in the honeycomb filter of the present embodiment are preferably formed into the wavelike shape with an equal amplitude in the through channel direction of the cell. According to such a constitution, the filter area can be increased while decreasing the pressure loss. The honeycomb filter is preferably further easily formed. On the other hand, if the wave type cell is not formed into the wavelike shape with the equal amplitude in the through channel direction of the cell, a flow region where the exhaust gas easily permeate the partition walls and a flow region where the exhaust gas does not easily permeate the partition walls are easily formed. In consequence, the cell in the whole through channel direction cannot efficiently be used for the purification of the exhaust gas, and the pressure loss is unfavorably easily increased.

However, examples of "the cell formed into the wavelike shape with the equal amplitude in the through channel direction of the cell" include i) a wave type cell in which when a wave has the same difference between the peak and the bottom, all the cell origins (starting points) are the peaks (or the bottoms) of the wave and in which the same wavelike shape is started and formed at least once.

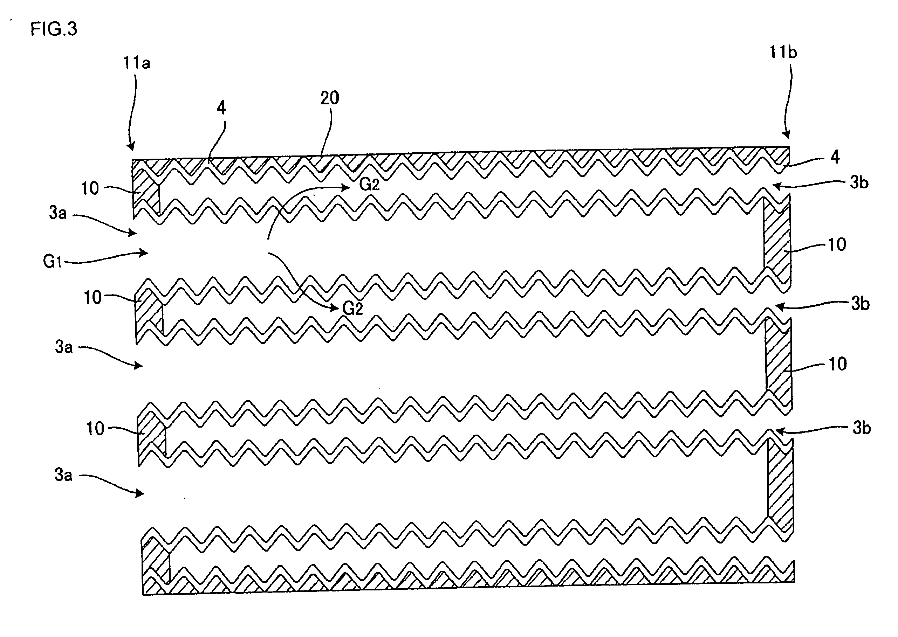

Specifically, in one example shown in Figs. 3 and 4, the origins (starting points) of all the cells start from the same wave shape in the vicinity of each peak of the wave, and the wave shape is formed at least once in the wave type cell. However, the wave type cell is not limited to such a wave type cell. The wave type cells of the honeycomb filter of the present invention also include another example in which the origins (starting points) of all the cells start from the same wave shape in the vicinity of the bottom of the wave and in which the wave shape is formed at least once in each wave type cell.

Moreover, all of the cells are preferably formed into the wavelike shape with the same cycle in the through channel direction. According to such a constitution, the filter area can be increased while locally decreasing the pressure loss. Moreover, the filter area can be increased while decreasing the pressure loss of the whole honeycomb filter. Therefore, the effect of the present invention can further be exerted. Moreover, the honeycomb filter can easily be formed. In addition, a forming process is simplified, and hence the yield is preferably improved.

Here, the same cycle is the shape (undulation) of the wave from the peak to the next peak of the cell formed into the wavelike shape, or the shape (undulation) of the wave from the bottom to the next bottom of the cell formed into the wavelike shape. Specifically, the cycle is the shape (undulation) of the wave from the peak to the next peak thereof as shown by character Z of Fig. 4, or the shape (undulation) of the wave from the bottom to the next bottom thereof.

Furthermore, the wave phase of the wave type cell in the through channel direction preferably coincides with that of the adjacent wave type cell. According to such a constitution, the filter area can be increased while locally decreasing the pressure loss. In addition, the filter area can be increased while decreasing the pressure loss in the whole honeycomb filter. Therefore, the effect of the present invention can further be exerted. On the other hand, if the phase shifts, the gas through channel in the cell narrows, and troubles such as the increase of the pressure loss and clogging of the through channel with soot might occur. Therefore, such troubles need to be controlled.

As shown in, for example, Figs. 3 and 4, the wave type cells which do not have any mutual wave phase shift (0 degree) can be exemplified as one example.

Moreover, the amplitude of each of the wave type cells is preferably from 150 to 350%, more preferably from 240 to 325% of the thickness of each of the partition walls. A region where there is the amplitude of the wave type cell, that is, a region where the peak and bottom of the wave type cell are formed is a region where the exhaust gas easily permeates the partition walls. Therefore, the amplitude of the wave type cell is controlled into a desired dimension with respect to the thickness of the partition wall, to control the passage speed of the exhaust gas passing through the peak and bottom of the wave type cell or the permeation pressure (partition wall penetration pressure) of the exhaust gas into the partition walls where the peak and bottom of the wave type cell are formed. In consequence, the filter area can be increased while decreasing the pressure loss, and the effect of the present invention is more easily exerted. On the other hand, if the amplitude of the wave type cell is smaller than 100% of the thickness of the partition wall, the filter area cannot be increased, and the purification efficiency or regeneration efficiency is unfavorably not easily improved. If the amplitude of the wave type cell is larger than 350% of the partition wall thickness, the influence of the pressure loss due to the passage of the gas increases, and hence the pressure loss is not easily decreased. Furthermore, a mechanical strength lowers. In addition, forming processability unfavorably lowers.

Here, "the amplitude of the wave type cell" is a difference between the peak and the bottom of the wave type cell, and is a distance (depth) from the peak to the bottom as shown by character R of Fig. 4.

Moreover, the wavelength of the wave type cell is from 5 to 9.5 times the thickness of the partition wall in one of preferable configurations. When the wavelength is formed in such a desired length range, the filter area can be increased while decreasing the pressure loss. Furthermore, the mechanical strength can be maintained, and hence the effect of the present invention can further be exerted. On the other hand, when the wavelength of the wave type cell is smaller than 5 times the partition wall thickness, the filter area cannot be increased, and the purification efficiency or regeneration efficiency is unfavorably not easily improved. Moreover, if the wavelength of the wave type cell is larger than 9.5 times, the pressure loss is not easily decreased, and the mechanical strength lowers. In addition, the forming processability unfavorably deteriorates.

Furthermore, the honeycomb filter preferably has a constitution comprising cells in which the upstream-side open area of each circulation hole is larger than the outlet-side open area. According to such a constitution, the inflow speed of the exhaust gas can securely be controlled. Together with a structure in which a pair of facing (wall) surfaces of each cell are undulated in the through channel direction, the flow of the gas can further be disturbed, and contact between the gas and the soot can be increased to further raise the burning speed. In consequence, a stress in the outlet-side end face of the filter can further be alleviated while improving a purification treatment efficiency. Furthermore, the suppression of cracking during regeneration and the improvement of the regeneration efficiency can simultaneously be achieved. In addition, the regeneration time can securely be shortened, and there are merits such as the decrease of fuel consumption and the lengthening of a regeneration interval in continuous regeneration.

As shown in, for example, Fig. 2, cells having large and small sectional areas are formed, whereby the upstream-side end faces of the cells having the large open areas (denoted with reference numeral 3a of Fig. 2, hereinafter appropriately referred to as "the large cells") are not plugged and opened, and the upstream-side end faces of the cells having the small open areas (denoted with reference numeral 3b of Fig. 2, hereinafter appropriately referred to as "the small cells") are plugged. Furthermore, the downstream-side end faces of the only large cells 3a are plugged in one example.

### [1-2] Other Constitution of Honeycomb Filter:

As shown in Figs. 1 to 3, the base member of the honeycomb filter in the present embodiment is constituted of a honeycomb structure comprising a plurality of cells which become through channels for an exhaust gas partitioned by the partition walls 4 made of a porous ceramic material having a large number of pores. This honeycomb structure is provided with an open end 11b formed on the downstream side of a large number of circulation holes and an open end 11a formed on the upstream side thereof, and the open ends 11b, 11a are provided with plugging portions which alternately plug the ends. However, there is not any special restriction on the whole shape of the honeycomb structure. Examples of the shape include a cylindrical shape shown in Figs. 1 and 2 and also include an elliptic shape, a square post-like shape and a triangular post-like shape.

Moreover, the open shape (also referred to as the cell shape, the shape of the cells in the cross section thereof in a direction vertical to a cell forming direction) of the circulation holes disposed in the honeycomb structure include the combination of the quadrangular and octagonal cells shown in Fig. 2 and also include combinations of pentangular, hexagonal and triangular cells. However, the present invention is not limited to such shapes, combinations and the like, and can broadly include known cell shapes. As a more preferable cell shape, the open frontal areas are preferably formed of a combination of round cells or quadrangular or more polygonal cells. Such combination of the round cells or the quadrangular or more polygonal cells is preferable, because while alleviating a high heat stress, cracking during regeneration is easily suppressed, and the inflow/outflow of the exhaust gas is easily controlled. Above all, the octagonal cells are preferable in consideration of a cell density, an open ratio or the like. More preferably, the honeycomb structure comprises a plurality of cells obtained by combining quadrangular cells (the upstream-side open shape) and octagonal cells (the downstream-side open shape) so that the upstream-side open area easily becomes larger than the outlet-side open area. In this way, the cells constituted of the quadrangular and octagonal cells are combined to form openings in the end faces of the honeycomb structure, and the plugging portions are further formed as described later, whereby the stress at the outlet-side end face can further be alleviated while improving the purification treatment efficiency. Furthermore, the suppression of the cracking during the regeneration and the improvement of the regeneration efficiency can preferably simultaneously be achieved.

As shown in, for example, Fig. 2, in a case where the honeycomb structure comprising the wave type cells constituted of the quadrangular and octagonal cells having different sectional shapes is formed, the wave type cells are prepared by processing a die or imparting a resistance so as to vary a raw material discharging speed. Furthermore, the number of holes of the die through which the raw material is supplied is increased in a portion which is to be formed into a wave type, thereby preparing the wave type cells. In this way, a difference is made in an extrusion speed (of the raw material), and the surface where the speed is high has the wavelike shape and the surface where the speed is low has a planar shape. There are various methods for obtaining such wave type cells. When an only pair of facing surfaces or regions are formed into the wavelike shape, the resistance is imparted to a specific portion of each slit to adjust the extrusion speed so that a desired structure can be prepared.

There is not any special restriction on the cell density of the base member of the honeycomb structure, but when the structure is used as the honeycomb filter as in the present embodiment, the cell density is preferably in a range of 6 to 1500 cells/square inch (0.9 to 233 cells/cm²). Moreover, the thicknesses of the partition walls are preferably in a range of 20 to 2000 µm.

Moreover, the porosities of the partition walls of the honeycomb structure are preferably from 35 to 75%. If the porosities of the partition walls are smaller than 35%, the permeability of the partition walls themselves remarkably lowers. Therefore, the ratio of the occurrence of the pressure loss with respect to the amount of the deposited soot tends to linearly increase, but the ratio of the occurrence of the pressure loss noticeably increases in a state in which any soot is not deposited. If the porosities are higher than 75%, the cracking might occur during canning.

Moreover, "an average pore diameter" and "the porosities" mentioned in the present description are the average pore diameter and the porosities measured by mercury porosimetry.

Moreover, the partition walls of the honeycomb structure preferably have pore diameters of 5 to 40 µm. If the pore diameters are smaller than 5 µm, the permeability becomes very low, and the ratio of the occurrence of the pressure loss while any soot is not deposited becomes very high. If the pore diameters are larger than 40 µm, a PM cannot sufficiently be collected when the exhaust gas permeates the partition walls. The exhaust gas easily passes through the partition walls, and hence a collection efficiency is not sufficient. Moreover, if the pore diameters of the partition walls are smaller than 5 µm, a penetration pressure during the passage of the exhaust gas through the partition walls becomes excessively large, which unfavorably easily causes the cracking.

Furthermore, the thicknesses of the partition walls of the honeycomb structure are preferably from 200 to 600 µm. If the thicknesses are smaller than 200 µm, a heat capacity decreases, and the deposited soot might abnormally burn during the regeneration to rapidly raise the internal temperature of the DPF, thereby causing the cracking. If the thicknesses are larger than 600 µm, a hydraulic diameter becomes excessively small, whereby the pressure loss increases.

It is to be noted that in a case where the honeycomb structure is used as the honeycomb filter of the present embodiment, the honeycomb structure preferably has a constitution in which one open end and the other open end of each of a plurality of cells are alternately plugged. As shown in, for example, Fig. 3, the honeycomb structure having the plurality of cells 3 which become the through channels for the gas partitioned by the partition walls 4 made of the porous ceramic material having a large number of pores may have a constitution in which one open end 11a and the other open end 11b of each of the plurality of cells 3 are alternately plugged by plugging portions 10. In a case where an exhaust gas G₁ flows into the exhaust gas inflow cells 3a which open in the exhaust gas inflow-side end face 11a, and the exhaust gas G₁ passes through the partition walls 4, particulates in the exhaust gas G₁ are collected by the partition walls 4, and an exhaust gas G₂ from the particulates have been removed flow out of the exhaust gas outflow cells 3b which open in the exhaust gas outflow-side end face 11b.

There is not any special restriction on the material of the base member of the honeycomb structure, but the ceramic material can preferably be used. From the viewpoints of the strength, heat resistance, corrosion resistance and the like, it is preferable to use various types of ceramic materials such as cordierite, alumina, mullite, lithium aluminum silicate, aluminum titanate, titania, zirconia, silicon nitride, aluminum nitride and silicon carbide. Alternatively, various heat-resistant metal materials of stainless steel and the like, or various types of adsorbent materials such as activated carbon, silica gel and zeolite are preferably used. The ceramic materials may be used alone or as a compound of them.

A material other than the above materials may be used as long as the material can be extruded, and a wavy wall honeycomb structure is obtained by a constitution of a forming die. Therefore, even in a case where a composite material obtained by dispersing different types of material particles or fibers in the above material, a polymer material such as a resin or a material which coats the surfaces of the partition walls after the extrusion-forming is used, a similar effect can be expected. Moreover, even in a case where a metal foil is wound around a honeycomb shape in a corrugated shape, when the foil is beforehand formed into the wavelike shape by a plasticity processing method, the wavy wall honeycomb structure can similarly be obtained.

Moreover, the above base member of the honeycomb structure is mixed with, for example, aggregate particles made of the ceramic material and water, and mixed with, if desired, an organic binder (hydroxypropoxyl methylcellulose, methylcellulose or the like), a pore former (graphite, starch, synthetic resin or the like), a surfactant (ethylene glycol, fatty acid soap or the like) or the like, followed by kneading, to form a clay. The clay is formed into a desired shape, and dried to obtain a formed article, and the formed article can be fired to obtain the base member.

Moreover, an oxide catalyst, another catalyst or a purification material may further be loaded into the partition walls of the base member of the honeycomb structure. For example, an NOx adsorber made of an alkali metal (Li, Na, K, Cs or the like) or an alkali earth metal (Ca, Ba, Sr or the like), a ternary catalyst, a cocatalyst typified by an oxide of cerium (Ce) and/or zirconium (Zr), a hydrocarbon (HC) adsorbing material or the like may be loaded.

As a method for preparing the honeycomb structure, for example, the following method is exemplified as one example. However, the method is not limited to such a honeycomb structure preparing method, and a known method for preparing the honeycomb structure may be used.

First, the binder, the surfactant, the pore former, water and the like are added to ceramic material, to obtain a forming material. The ceramic material is preferably at least one selected from the group consisting of silicon carbide, a silicon-silicon carbide-based composite material, cordierite, mullite, alumina, titania, spinel, a silicon carbide-cordierite-based composite material, lithium aluminum silicate, aluminum titanate, and an iron-chromium-aluminum-based alloy. Among them, silicon carbide or the silicon-silicon carbide-based composite material is preferable. When the silicon-silicon carbide-based composite material is used, the material is mixed with silicon carbide powder and metal silicon powder to form the ceramic material. The content of the ceramic material is preferably from 40 to 90 mass% of the whole forming material.

Examples of the binder include methylcellulose, hydroxypropoxyl cellulose, hydroxyethyl cellulose, carboxymethylcellulose, and polyvinyl alcohol. Among them, methylcellulose and hydroxypropoxyl cellulose are preferably used together. The content of the binder is preferably from 3 to 15 mass% of the whole forming material.

The content of the water is preferably from 7 to 45 mass% of the whole forming material.

As the surfactant, ethylene glycol, dextrin, fatty acid soap, polyalcohol or the like may be used. These surfactants may be used alone or as a combination of two or more of them. The content of the surfactant is preferably 5 mass% or less of the whole forming material.

There is not any special restriction on the pore former as long as the pore former forms pores after fired, and examples of the pore former include starch, resin balloon, water-absorbing resin, silica gel, and carbon. The content of the pore former is preferably 0 to 15 mass% of the whole forming material.

Next, the forming material is kneaded to form the clay. There is not any special restriction on a method for kneading the forming material to form the clay, and examples of the method include methods using a kneader, a vacuum clay kneader and the like.

Next, the clay is formed into a cylindrical formed honeycomb article 1 as shown in Figs. 1 and 2. The formed honeycomb article 1 has partition walls for partitioning the plurality of cells 3 which become the through channel for a fluid and which extend from the one end face 11a to the other end face 11b, and comprises wave type cells each having an only pair of facing surfaces formed into the wavelike shape with the equal wavelength in the through channel direction. A method for forming the wave type cells is preferably performed while adjusting the extrusion speed during the extrusion-forming. However, there is not any special restriction on a method for forming the clay to form the formed honeycomb article, and a heretofore known forming method such as the extrusion-forming may be used. Preferable examples of the method include a method for forming the formed honeycomb article by the extrusion-forming by use of the die having desired cell shape, partition wall thicknesses and cell density. As a material of the die, a super hard alloy which does not easily wear is preferable. Moreover, an outer peripheral wall is disposed at the outermost periphery of the partition walls.

Next, the obtained formed honeycomb article is preferably dried. There is not any special restriction on a drying method, and examples of the method include microwave heating drying, an electromagnetic heating system such as high-frequency dielectric heating drying, hot air drying and an external heating system such as overheat steam drying. Among them, it is preferable that after drying a constant amount of water by the electromagnetic heating system, the remaining water is dried by the external heating system, because the whole formed article can quickly and uniformly be dried without generating any crack. As drying conditions, after removing the water of 30 to 95 mass% of the water before the drying by the electromagnetic heating system, the water is preferably decreased to 3 mass% or less by the external heating system. Dielectric heating drying is preferable as the electromagnetic heating system, and hot air drying is preferable as the external drying system. A drying temperature is preferably from 90 to 180°C. A drying time is preferably from 1 to 10 hours.

Next, when the length of the formed honeycomb article in a central axis direction thereof (the length in a cell extending direction) is not a desired length, both end faces (both ends) are preferably cut into a desired length. There is not any special restriction on a cutting method, but a method using a double-ended disc saw cutter or the like is a preferable example.

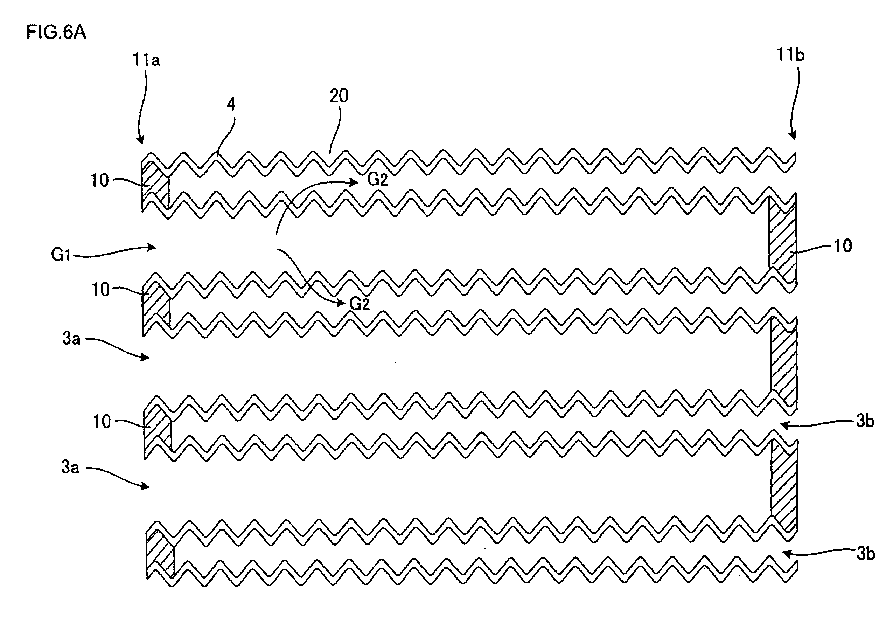

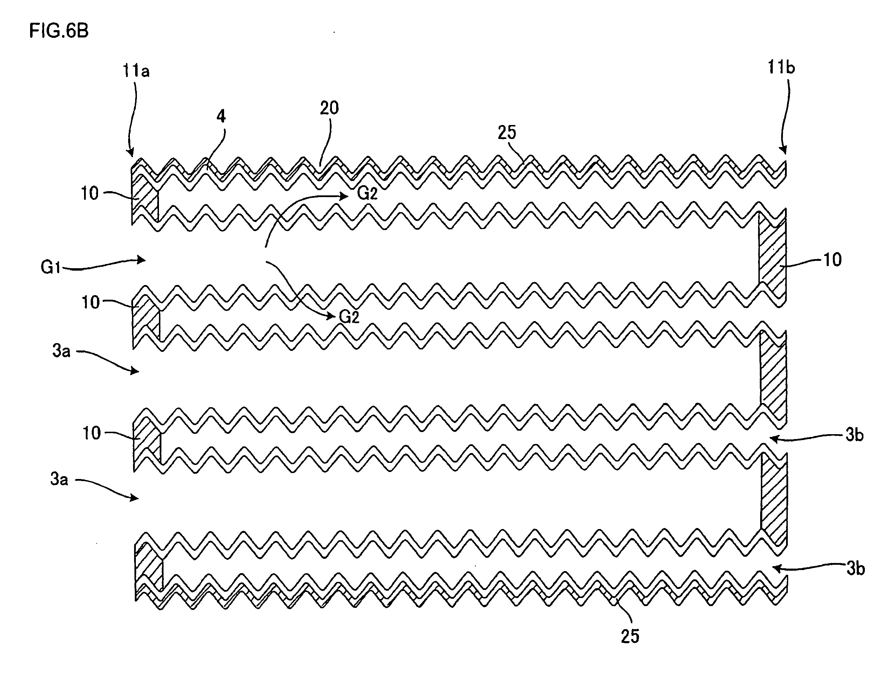

Furthermore, the outer peripheral portion of the honeycomb structure is formed into a concave/convex shape corresponding to the wavelike shape of the wave type cells in one of the preferable configurations. When the honeycomb structure is formed into such a shape, safety during the canning can preferably sufficiently be acquired. As a method for forming the outer peripheral portion of the honeycomb structure into the concave/convex shape corresponding to the wavelike shape of the wave type cells, after grinding a bonded honeycomb segment article or the honeycomb structure obtained through the above processes, the peripheral surface thereof is not coated with an outer peripheral coat layer made of the same material as that of the bonded honeycomb segment article or the honeycomb structure, but is dried and fired as it is, so that it is possible to obtain a substantially columnar honeycomb structure provided with the concave/convex shape in a length direction in which a segment structure is disposed. Specifically, a honeycomb structure shown in Fig. 6A can be illustrated. Furthermore, after grinding the bonded honeycomb segment article or the honeycomb structure obtained through the above processes, the peripheral surface thereof is coated with the outer peripheral coat layer made of the same material as that of the bonded honeycomb segment article or the honeycomb structure so that the coat layer is disposed along the outer peripheral surface as shown in Fig. 6B, followed by drying and hardening, so that it is possible to obtain the substantially columnar honeycomb structure provided with the concave/convex shape in the length direction in which the segment structure is disposed.

However, the outer peripheral portion of the honeycomb structure is more preferably formed into a thick or thin planar shape in accordance with the wavelike shape of the wave type cells. The portion can securely be provided with a strength against an external stress.

In a method for forming the plugging portions, a plugging slurry is prepared and stored in a storage container. Next, the end of the honeycomb structure provided with the above mask is immersed into the storage container to charge the above plugging slurry into the open frontal areas of the cells which are not masked. Then, as to the other end of the honeycomb structure, the cells each having one end plugged are masked, and the plugging slurry is charged into the cells each having the one end which is not plugged, thereby forming the plugging portions. In consequence, each cell having the one end which is not plugged has the other end plugged, and the other end of the honeycomb structure has a constitution in which the cells are alternately plugged in a checkered pattern. Moreover, plugging may be performed after the formed honeycomb article is fired to form a fired honeycomb article.

As to this plugging member, a material of the plugging member can be obtained by mixing the ceramic material, the pore former, the surfactant, the water and the like in a slurry state, followed by kneading with a mixer or the like. As the type of the ceramic material used for the material of the plugging member, a material for forming the desired material of the plugging member may be used. In the case of, for example, silicon carbide, a mixture with SiC powder and metal Si powder may be used. The material is preferably the same material as the ceramic material used when preparing the formed ceramic article of the honeycomb structure. Moreover, a silicon carbide based material may be used as the material of the plugging member. Furthermore, there is not any special restriction on the type of the pore former used in the material of the plugging member, but examples of the pore former include graphite, flour, starch, phenol resin, polymethyl methacrylate, polyethylene, polyethylene terephthalate, resin balloon, Silastic balloon, and fly ash balloon. The resin balloon or fly ash balloon is preferably used because it has less heat during degreasing. The type or content of such a pore former can be varied to control the porosity and Young's modulus of the plugging member. The content of the pore former is preferably from 0.1 to 20 parts by mass with respect to 100 parts by mass of the ceramic material used in the material of the plugging member. There is not any special restriction on the type of the surfactant used in the material of the plugging member, but examples of the surfactant include ethylene glycol, dextrin, fatty acid soap and polyalcohol.

As the material of the plugging member, besides the ceramic material, the pore former, the surfactant and the water, methylcellulose, hydroxypropoxyl methylcellulose, polyethylene oxide, hydroxypropyl methylcellulose, hydroxyethyl cellulose, carboxyl methylcellulose, polyvinyl alcohol or the like may be used.

### [2] Manufacturing Method of Honeycomb Filter according to the Present Invention:

Next, a manufacturing method of the honeycomb filter according to the present invention will be described. As the manufacturing method of the honeycomb filter according to the present invention, for example, the following method is one example. However, the present invention is not limited to such a method for preparing the honeycomb structure, and the honeycomb filter may be manufacturing by appropriately using a known method for preparing the honeycomb structure as long as the effect of the present invention can be exerted by employing the constitution of the present invention.

The manufacturing method of the honeycomb filter described above is preferable in which during the extrusion of the forming material containing the ceramic material, the extrusion speed is adjusted to form the wave type cells all having wavelike shape with the equal wavelength in the through channel direction. To regulate the extrusion speed, an extrusion pressure or a pump pressure is regulated. Moreover, the surface roughness or lower hole diameter of the slit of the die may be varied to adjust the extrusion speed, whereby the cells having the wavelike shape in a cell passage direction (the z-axis direction) are extrusion-formed.

Specifically, the die is processed as described later to vary the extrusion speed for extruding the material, whereby the only pair of facing surfaces are formed into the wavelike shape with the equal wavelength in the cell passage direction. The partition wall surfaces as the pair of facing surfaces, and planar partition wall surfaces which do not have the wavelike shape can be formed. The extrusion speed is preferably regulated in such a range as to obtain an extrusion pressure of 2.0 to 3.0 MPa and a pump pressure of 2.0 to 3.0 MPa.

Moreover, as the die which can preferably be used in the present embodiment, a die processed as follows can be illustrated.

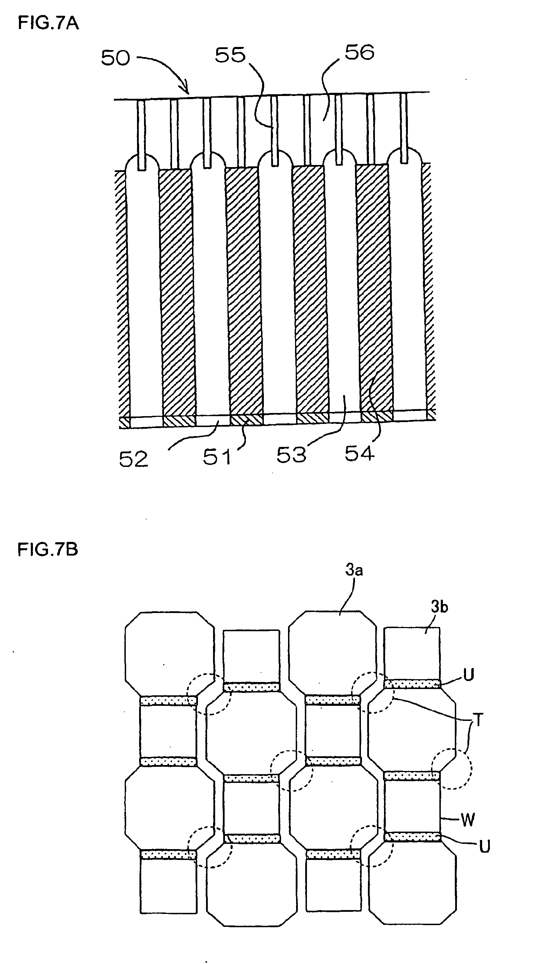

As shown in Fig. 7A, a die 50 is roughly constituted of a back plate 51 provided with through holes 52, a back hole passage member 54 provided with back holes 53, and a slit member 56 provided with slits 55. Here, the hole diameters or depths of the through holes 52 formed in the back plate 51 (the thickness of the back plate) can be varied to change the resistance of the forming material (hereinafter referred to as "the material) against flowing. In consequence, the extrusion flow rate of the material can be regulated. It is to be noted that Fig. 7A is a schematic sectional view showing the schematic constitution and structure of the die 50 used in the extrusion-forming.

Moreover, the back hole passage portions 53 function as passages for introducing the material into the slits 55, and are generally disposed so that the intersections of the partition walls of the honeycomb structure coincide with the centers of the back holes 53. The slit member 56 determines the shape and constitution of the honeycomb structure, and the material extruded through the slits 55 form the partition walls.

The material passes through the spaces of the through holes 52, the back holes 53 and the slits 55 in this order, but the material discharged from the certain back hole 53 and the material discharged from the adjacent back hole 53 mutually flow through the slit 55 to join each other in the slit 55 between both the back holes 53, come in close contact with each other, and are continuously extruded while forming the partition walls of the honeycomb structure.

The materials are extruded in the same manner as in the extrusion-forming of the cells having large and small sectional areas, usually before the materials join each other in the slit, whereby a portion having a resistance and a portion which does not have any resistance are formed by a lit portion. In consequence, a difference is made in the extrusion speed, and hence a desired wave type structure is obtained. Specifically, as shown in Fig. 7B, when the only pair of facing surfaces of each cell are formed into the wavelike shape, the resistance of the slit of the die corresponding to the surfaces to be formed into the wavelike shape (a region W of Fig. 7B) is decreased to increase the extrusion speed of the material, whereby the surfaces can be formed into the wavelike shape. Moreover, the resistance of the slit of the die corresponding to the other surfaces that are not formed into the wavelike shape (a region U of Fig. 7B) is increased to decrease the extrusion speed of the material, whereby the surfaces can be formed into flat surfaces. Furthermore, the only pair of facing regions of each cell may similarly be formed.

It is to be noted that the present invention is not limited to such a die, and an extrusion-forming method most generally used in the known manufacturing of the honeycomb structure may be modified and used without departing from the scope of the present invention.

Furthermore, the method for manufacturing the honeycomb filter described above is preferable in which during the extrusion of the forming material containing the ceramic material, an ultrasonic vibration is applied to form the wave type cells all formed into the wavelike shape with the equal wavelength in the through channel direction. In this way, when the ultrasonic vibration is applied, the wave type cells formed (into the wavelike shape) with the equal wavelength in the through channel direction are preferably easily formed. Moreover, in addition to the above adjustment of the extrusion speed, the ultrasonic vibration is directly applied to, for example, the die or the like for forming the filter. In this case, the wave type cells are further easily formed into the wavelike shape with the equal wavelength in the through channel direction, and waves are efficiently formed.

### [Examples]

Hereinafter, the present invention will further specifically be described with respect to examples, but the present invention is not limited to these examples.

### [1-1] Pitch (1 wavelength) of Wave Type Cell:

To measure the pitch (1 wavelength) of a wave type cell, the image of the cross section of a partition wall was photographed by using a scanning type electronic microscope (SEM) to measure the pitch (1 wavelength) of the wave type cell from the image.

### [1-2] Pressure Loss Measurement Test:

Soot was deposited in a DPF by use of a device for generating soot by burner combustion on conditions including a gas flow rate of 2.0 to 3.0 Nm³/minute and a gas temperature of 150 to 250°C, and a pressure loss before and after the DPF was measured with respect to a relation between the pressure loss and the deposited amount of the soot. As to the pressure loss, pressure loss values were obtained when the soot was deposited up to an amount of 1 g/L and when the soot was deposited up to an amount of 6 g/L, and used on the basis of the pressure loss value of Comparative Example 1 described later, whereby a pressure loss decrease ratio [%] was evaluated.

### [1-3] A-axis Compressive Strength Measurement Test:

A compressive strength in a direction parallel to through channels of a honeycomb structure was measured as regulated in JASO M505-87 (Test Method of Ceramic Monolith Carrier for Automobile Exhaust Gas Purifying Catalyst). Specifically, the measurement conformed to JASO M505-87, and as to the honeycomb structure having a cell wall pressure of 12 mil and a cell density of 200 cpsi, a columnar test piece having a length of 25.4 mm in an A-axis direction and a diameter of 25.4 mm in a direction perpendicular to this A-axis direction was cut out of the honeycomb structure. The strength was measured using an autograph by a compressive test in the A-axis direction.

### [1-4] General Evaluation

Honeycomb filters of comparative examples were compared with those of examples as described later, and generally evaluated from the results of the above pressure loss and A-axis compressive strength. In an evaluation method, three stages of ⊚: remarkably satisfactory, ○: satisfactory and X: no effect or worse were evaluated. It is to be noted that as to the pressure loss, the decrease of 2% or more with a soot amount of 1 g/L and the decrease of 4% or more with a soot amount of 6 g/L were remarkably satisfactory, even the decrease of 2% or 4% or less was satisfactory, and the other result was evaluated as X. In the A-axis compressive strength measurement test, the decrease of 15% or more was evaluated as "X: bad", and a decrease less than 15% was evaluated as ⊚: satisfactory. The evaluation was generally performed from the results of the pressure loss and the A-axis compressive strength measurement test.

### [2] Evaluation of Regeneration Time:

Furthermore, an experiment was conducted as to a regeneration time in Example 6 and Comparative Examples 1 to 3. Specifically, a combustion gas containing soot generated by burning a diesel fuel light oil was caused to flow into a honeycomb filter, and a PM was collected in an amount of 8 g/L by the honeycomb filter. Afterward, the temperature of an exhaust gas was raised by post injection, and the inlet gas temperature of the honeycomb filter was held at 650°C for 10 minutes, whereby the soot in the honeycomb filter was burnt and removed.

### [3-1] Preparation of Honeycomb Structure:

### (Example 1)

As a raw material, a cordierite forming material containing talc, kaolin and alumina as main components was blended with water and a binder, dispersion-mixed and kneaded, and the resultant forming material was extruded into a columnar shape by a clay kneader. The material was extruded by an extrusion-forming machine while adjusting an extrusion speed, to extrusion-form a formed honeycomb article in which cell sectional areas increased on a gas inflow side and decreased on a gas outflow side, and wave type cells each having an only pair of facing surfaces formed into a wavelike shape with an equal wavelength in the through channel direction of the cells were formed. At this time, the cells were a combination of quadrangular and octagonal cells as shown in Fig. 2. Moreover, regulations were performed so that a ratio between sectional areas of exhaust gas inflow-side cells and those of exhaust gas outflow-side cells was large cell sectional areas:small cell sectional areas = 1.78:1, the extrusion pressure of the extrusion-forming machine was 2.0 MPa, and a pump pressure was 2.0 MPa.

Next, the obtained formed honeycomb article was dried with a microwave drier, a hot air drier or the like. The dried article was further cut into a predetermined length. Furthermore, plugging portions were alternately formed in both the end faces of the formed honeycomb article as described above, to prepare a honeycomb filter having a partition wall thickness of 0.356 mm, a cell density of 46.5 cells/cm² (300 cpsi), a honeycomb structure outer diameter of 143.8 mm, a honeycomb structure length of 152.4 mm, a wave type cell amplitude of 0.356 mm, a wave type cell one pitch (1 wavelength) of 3.3 mm, and a wave phase shift of 0 degree (the wave type cells which did not have any wave phase). This filter was obtained as the honeycomb filter of Example 1.

### (Examples 2 to 5)

In the same manner as in Example 1, a forming material was extruded into a columnar shape by a clay kneader, and extruded by an extrusion-forming machine while adjusting an extrusion speed, to extrusion-form a formed honeycomb article in which cell sectional areas increased on a gas inflow side and decreased on a gas outflow side, and wave type cells all formed into a wavelike shape with an equal wavelength in the through channel direction of the cells were formed. Afterward, the obtained formed honeycomb article was dried with a microwave drier, a hot air drier or the like. Moreover, the dried article was cut into a predetermined length. Furthermore, plugging portions were alternately formed in both the end faces of the formed honeycomb article as described above, to prepare a honeycomb structure having a partition wall thickness of 0.356 mm, a cell density of 46.5 cell/cm² (300 cpsi), a honeycomb structure outer diameter of 143.8 mm, a honeycomb structure length of 152.4 mm, and a wave phase shift of 0 degree (wave type cells which did not have any wave phase). At this time, the cells were a combination of quadrangular and octagonal cells shown in Fig. 2, and regulations were performed so that the extrusion pressure of the extrusion-forming machine was 2.3 MPa and a pump pressure was 2.1 MPa, to prepare a honeycomb filter so that the amplitude of the wave type cells was 0.534 mm and one pitch (1 wavelength) of the wave type cells was 3.3 mm. This honeycomb filter was obtained as Example 2. Similarly, the cells were a combination of quadrangular and octagonal cells, and regulations were performed so that the extrusion pressure of the extrusion-forming machine was 2.4 MPa and a pump pressure was 2.2 MPa, to prepare a honeycomb filter so that the amplitude of the wave type cells was 0.534 mm and one pitch (1 wavelength) of the wave type cells was 2.8 mm. This honeycomb filter was obtained as Example 3. Similarly, the cells were a combination of quadrangular and octagonal cells, and regulations were performed so that the extrusion pressure of the extrusion-forming machine was 2.6 MPa and a pump pressure was 2.3 MPa, to prepare a honeycomb filter so that the amplitude of the wave type cells was 0.712 mm and one pitch (1 wavelength) of the wave type cells was 2.8 mm. This honeycomb filter was obtained as Example 4. Similarly, the cells were a combination of quadrangular and octagonal cells, and regulations were performed so that the extrusion pressure of the extrusion-forming machine was 2.7 MPa and a pump pressure was 2.5 MPa, to prepare a honeycomb filter so that the amplitude of the wave type cells was 0.712 mm and one pitch (1 wavelength) of the wave type cells was 2.3 mm. This honeycomb filter was obtained as Example 5. Similarly, the cells were a combination of quadrangular and octagonal cells, and regulations were performed so that the extrusion pressure of the extrusion-forming machine was 2.8 MPa and a pump pressure was 2.6 MPa, to prepare a honeycomb filter so that the amplitude of the wave type cells was 0.889 mm and one pitch (1 wavelength) of the wave type cells was 2.3 mm. This honeycomb filter was obtained as Example 6. Similarly, the cells were a combination of quadrangular and octagonal cells, and regulations were performed so that the extrusion pressure of the extrusion-forming machine was 2.8 MPa and a pump pressure was 2.8 MPa, to prepare a honeycomb filter so that the amplitude of the wave type cells was 0.979 mm and one pitch (1 wavelength) of the wave type cells was 2.3 mm. This honeycomb filter was obtained as Example 7. Similarly, the cells were a combination of quadrangular and octagonal cells, and regulations were performed so that the extrusion pressure of the extrusion-forming machine was 2.8 MPa and a pump pressure was 2.9 MPa, to prepare a honeycomb filter so that the amplitude of the wave type cells was 1.068 mm and one pitch (1 wavelength) of the wave type cells was 2.3 mm. This honeycomb filter was obtained as Example 8. Similarly, the cells were a combination of quadrangular and octagonal cells, and regulations were performed so that the extrusion pressure of the extrusion-forming machine was 2.9 MPa and a pump pressure was 2.9 MPa, to prepare a honeycomb filter in which the amplitude of the wave type cells was 1.157 mm and one pitch (1 wavelength) of the wave type cells was 2.3 mm. This honeycomb filter was obtained as Example 9. Similarly, the cells were a combination of quadrangular and octagonal cells, and regulations were performed so that the extrusion pressure of the extrusion-forming machine was 3.0 MPa and a pump pressure was 3.0 MPa, to prepare a honeycomb filter so that the amplitude of the wave type cells was 1.246 mm and one pitch (1 wavelength) of the wave type cells was 2.3 mm. This honeycomb filter was obtained as Example 10.

### (Comparative Example 1)

Moreover, in the same manner as in Example 1, as a raw material, a cordierite forming material containing talc, kaolin and alumina as main components was blended with water and a binder, dispersion-mixed and kneaded, and the resultant forming material was extruded into a columnar shape by a clay kneader. The material was extruded by an extrusion-forming machine to extrusion-form a formed honeycomb article in which cell sectional areas increased on a gas inflow side and decreased on a gas outflow side, and all cells were not formed into a wavelike shape but were formed into a generally linear shape. At this time, the cells were a combination of quadrangular and octagonal cells, a ratio between sectional areas of exhaust gas inflow-side cells and those of exhaust gas outflow-side cells was large cell sectional areas:small cell sectional areas = 1.78:1, and the extrusion speed of the extrusion-forming machine was not regulated and was constant.

Next, the obtained formed honeycomb article was dried with a microwave drier, a hot air drier or the like. The dried article was further cut into a predetermined length. Furthermore, plugging portions were alternately formed in both the end faces of the formed honeycomb article as described above, to prepare a honeycomb filter which did not have any cell amplitude and which had a partition wall thickness of 0.356 mm, a cell density of 46.5 cells/cm² (300 cpsi), a honeycomb structure outer diameter of 143.8 mm and a honeycomb structure length of 152.4 mm. This filter was obtained as the honeycomb filter of Comparative Example 1.

### (Comparative Example 2)

In the same manner as in Comparative Example 1, as a raw material, a cordierite forming material containing talc, kaolin and alumina as main components was blended with water and a binder, dispersion-mixed and kneaded, and the resultant forming material was extruded into a columnar shape by a clay kneader. The material was extruded by an extrusion-forming machine to extrusion-form a formed honeycomb article so that cell sectional areas on a gas inflow side were equal to those on a gas outflow side (a ratio between the sectional areas of exhaust gas inflow-side cells and those of exhaust gas outflow-side cells was 1:1), and all cells were not formed into a wavelike shape but were formed into a generally linear shape. At this time, the cells were quadrangular cells, and the extrusion speed of the extrusion-forming machine was not regulated and was constant. Next, the obtained formed honeycomb article was dried with a microwave drier, a hot air drier or the like. The dried article was further cut into a predetermined length. Furthermore, plugging portions were alternately formed in both the end faces of the formed honeycomb article as described above, to prepare a honeycomb filter which did not have any cell amplitude and which had a partition wall thickness of 0.356 mm, a cell density of 46.5 cells/cm² (300 cpsi), a honeycomb structure outer diameter of 143.8 mm and a honeycomb structure length of 152.4 mm. This filter was obtained as the honeycomb filter of Comparative Example 2.

### (Comparative Example 3)

As a raw material, a cordierite forming material containing talc, kaolin and alumina as main components was blended with water and a binder, dispersion-mixed and kneaded, and the resultant forming material was extruded into a columnar shape by a clay kneader. The material was extruded by an extrusion-forming machine while adjusting an extrusion speed, to extrusion-form a formed honeycomb article so that cell sectional areas increased on a gas inflow side and decreased on a gas outflow side, and wave type cells each having four facing surfaces formed into a wavelike shape with an equal wavelength in a through channel direction of the cells were formed. At this time, the cells were a combination of quadrangular and octagonal cells shown in Fig. 2, and regulations were performed so that a ratio between sectional areas of exhaust gas inflow-side cells and those of exhaust gas outflow-side cells was large cell sectional areas:small cell sectional areas = 1.78:1, the extrusion pressure of the extrusion-forming machine was 2.6 MPa, and a pump pressure was 2.3 MPa. Furthermore, the obtained formed honeycomb article was dried with a microwave drier, a hot air drier or the like. The dried article was further cut into a predetermined length. Furthermore, plugging portions were alternately formed in both the end faces of the formed honeycomb article as described above, to prepare a honeycomb filter having a partition wall thickness of 0.356 mm, a cell density of 46.5 cells/cm² (300 cpsi), a honeycomb structure outer diameter of 143.8 mm, a honeycomb structure length of 152.4 mm, a wave type cell amplitude of 0.712 mm, wave type cell one pitch (1 wavelength) of 2.8 mm and a wave phase shift of 0 degree (the wave type cells which did not have any wave phase). This filter was obtained as the honeycomb filter of Comparative Example 3.

### (Comparative Example 4)

A honeycomb filter of Comparative Example 4 was formed in the same manner as in Example 6 except that regulations were performed so that the extrusion pressure of an extrusion-forming machine was 2.8 MPa and a pump pressure was 2.6 MPa, the honeycomb filter had a wave type cell amplitude of 0.889 and a wave type cell one pitch (1 wavelength) of 2.3 mm, and the disposed cells were only quadrangular cells.

The honeycomb filters of Examples 1 to 10 and Comparative Examples 1 to 3 obtained as described above were subjected to the above experiments. Results are shown in Table 1, and characteristics of the honeycomb filters of Examples 1 to 10 and Comparative Examples 1 to 3 are shown in Table 1. Furthermore, each regeneration time obtained in the above experiment [2] in Comparative Examples 1, 2 and 4 and Example 6 was compared with that of Comparative Example 2, and a ratio at which each regeneration time could be shortened is shown in Table 2.

**[Table 1]**

| | Structure | Amplitude (mm) | Pitch (1 wavelength) (mm) | Extrusion pressure (MPa) | Pump pressure (MPa) | Pressure loss (soot amount of 1 g/L) (%) | Pressure loss (soot amount of 6 g/L) (%) | A-axis compressive strength (%) | General evaluation |
|---|---|---|---|---|---|---|---|---|---|
| Comparative Example 1 | Quadrangular-octagonal/planar | - | - | - | - | 0 | 0 | 0 | - |
| Comparative Example 2 | Quadrangular/planar | - | - | - | - | -3.0 | +15.0 | 0 | - |
| Comparative Example 3 | Quadrangular-octagonal/wave type (4 surfaces) | 0.712 | 2.8 | 2.6 | 2.3 | -2.7 | -3.6 | -15.5 | × |
| Example 1 | Quadrangular-octagonal/wave type | 0.356 | 3.3 | 2.0 | 2.0 | -0.8 | -1.6 | -3.7 | ○ |
| Example 2 | Quadrangular-octagonal/wave type | 0.534 | 3.3 | 2.3 | 2.1 | -1.4 | -2.0 | -5.3 | ○ |
| Example 3 | Quadrangular-octagonal/wave type | 0.534 | 2.8 | 2.4 | 2.2 | -1.9 | -2.3 | -5.5 | ○ |
| Example 4 | Quadrangular-octagonal/wave type | 0.712 | 2.8 | 2.6 | 2.3 | -2.3 | -2.8 | -7.6 | ○ |
| Example 5 | Quadrangular-octagonal/wave type | 0.712 | 2.3 | 2.7 | 2.5 | -2.6 | -3.4 | -7.9 | ○ |
| Example 6 | Quadrangular-octagonal/wave type | 0.889 | 2.3 | 2.8 | 2.6 | -2.9 | -4.2 | -9.8 | ⊚ |
| Example 7 | Quadrangular-octagonal/wave type | 0.979 | 2.3 | 2.8 | 2.8 | -3.2 | -5.1 | -9.5 | ⊚ |
| Example 8 | Quadrangular-octagonal/wave type | 1.068 | 2.3 | 2.8 | 2.9 | -3.4 | -6.1 | -11.4 | ⊚ |
| Example 9 | Quadrangular-octagonal/wave type | 1.157 | 2.3 | 2.9 | 2.9 | -2.9 | -5.3 | -11.2 | ⊚ |
| Example 10 | Quadrangular-octagonal/wave type | 1.246 | 2.3 | 3.0 | 3.0 | -1.8 | -3.7 | -13.1 | o |

**[Table 2]**

| | Structure | Amplitude (mm) | Pitch (1 wavelength) (mm) | Regeneration time (%) |
|---|---|---|---|---|
| Comparative Example 1 | Quadrangular-octagonal/planar | - | - | -3 |
| Comparative Example 2 | Quadrangular/planar | - | - | - |
| Comparative Example 4 | Quadrangular/wave type | 0.889 | 2.3 | -7 |
| Example 6 | Quadrangular-octagonal/wave type | 0.889 | 2.3 | -17 |

### (Consideration 1)

As shown in Table 1, satisfactory results could be obtained in the honeycomb filters of Examples 1 to 10. In particular, when the ratio of the occurrence of the pressure loss during the deposition of the soot is decreased, as to the fluctuation range of the pressure loss in Examples 6 to 9, a decrease of 2% or more with a soot amount of 1 g/L and a decrease of 4% or more with a soot amount of 6 g/L can be confirmed, the influence of the wave type cells is large, and the results are remarkably satisfactory. Moreover, in the honeycomb filters of Examples 1 to 10, the A-axis compressive strength uniformly decreases, the decrease of the A-axis compressive strength remains within 15% at maximum, and it can be confirmed that the strength is within a design reference range. Therefore, it can be confirmed that the wave type cells of the present embodiment do not have such a large influence that the A-axis compressive strength does not noticeably decrease, and that the isostatic strength of the whole honeycomb filter does not lower.

On the other hand, in Comparative Example 3, unlike the present embodiment, four surfaces of each quadrangular cell and four surfaces of each octagonal cell including sides facing the quadrangular cell are formed into a wavelike shape, and hence the A-axis compressive strength exceeds 15%, which ensures that the honeycomb filter has poor practicability. Furthermore, Comparative Example 2 is the honeycomb filter which is constituted only of the quadrangular cells and which does not have any wave type cell, and the pressure loss during the deposition of 6 g/L of soot is 15%, and hence it is confirmed that a disadvantage such as cracking due to the pressure loss easily occurs.

It is to be noted that during the canning or the like, especially strengths along B-axis, C-axis raise problems, but in the present embodiment, the wavelike shape is formed only in the cell passage direction, and hence the strengths along B-axis, C-axis are the same as those in the case of flat cells (e.g., the cells of the honeycomb filter of Comparative Example 1).

### (Consideration 2)

Furthermore, as shown in Table 2, it is ensured that in the examples employing the wave type cells having different sectional areas, the regeneration time can noticeably be shortened even as compared with Comparative Examples 1 to 3, and it has been demonstrated that the regeneration efficiency is improved. On the other hand, in the comparative examples, as compared with a honeycomb filter 2 constituted of the cells having an equal sectional area, the regeneration time can be shortened in the honeycomb filter of Comparative Example 1 constituted of the cells having different sectional areas and the honeycomb filter of Comparative Example 4 constituted of the wave type cells having the equal sectional area, but unlike the examples, remarkable shortening cannot be realized.

The honeycomb filter according to the present invention can be utilized to remove particulate matters from an exhaust gas discharged from an internal combustion engine such as an automobile engine, an engine for a construction machine or a stational engine for an industrial machine, another combustion apparatus or the like.

## Claims

1. A honeycomb filter comprising:
a honeycomb structure having a large number of cells which become passages for an exhaust gas partitioned by partition walls and having large and small sectional areas of the cells, and
plugging portions alternately plugged at open ends of the large number of cells,
wherein the large number of cells include wave type cells each having an only pair of facing surfaces or regions thereof formed into a wavelike shape with an equal wavelength in a passage direction of the cells.

2. The honeycomb filter according to claim 1, wherein the wave type cells are formed into the wavelike shape with an equal amplitude in the cell passage direction.

3. The honeycomb filter according to claim 1 or 2, wherein all the cells are formed into the wavelike shape with an equal cycle in the cell passage direction.

4. The honeycomb filter according to any one of claims 1 to 3, wherein the amplitude of each of the wave type cells is from 150 to 350% of the thickness of each of the partition walls.

5. The honeycomb filter according to any one of claims 1 to 4, wherein the wavelength of each of the wave type cells is from 5 to 9.5 times the thickness of each of the partition walls.

6. The honeycomb filter according to any one of claims 1 to 5, wherein the upstream-side open sectional areas of the wave type cells are larger than the outlet-side open sectional areas thereof.

7. The honeycomb filter according to any one of claims 1 to 6, wherein the wave type cells are constituted of a combination of alternately disposed quadrangular and octagonal cells.

8. The honeycomb filter according to any one of claims 1 to 7, wherein the outer peripheral portion of the honeycomb structure is formed into a concave/convex shape corresponding to the wavelike shape of the wave type cells.

9. The honeycomb filter according to any one of claims 1 to 8, wherein the outer peripheral portion of the honeycomb structure is formed into a thick or thin planar shape corresponding to the wavelike shape of the wave type cells.

10. A method for manufacturing the honeycomb filter according to any one of claims 1 to 9, comprising:
adjusting an extrusion speed during extrusion of a forming material containing a ceramic material to form wave type cells so that an only pair of facing surfaces of each cell have a wavelike shape with an equal wavelength in a through channel direction.

## Patentansprüche

1. Wabenfilter, wobei dieser Folgendes umfasst:
eine Wabenstruktur mit einer großen Anzahl an Zellen, die zu Durchlässen für ein Abgas werden, die durch Trennwände getrennt sind und große und kleine Querschnittsflächenabschnitte der Zellen aufweisen, und
Verschlussabschnitte, die abwechselnd an offenen Enden der großen Anzahl an Zellen verschlossen sind,
worin die große Anzahl an Zellen wellenförmige Zellen umfasst, die jeweils nur ein Paar an gegenüberliegenden Oberflächen oder Bereichen davon aufweisen, die mit gleicher Wellenlänge in eine Durchlassrichtung der Zellen wellenförmig ausgebildet sind.

2. Wabenfilter nach Anspruch 1, worin die wellenförmigen Zellen in der wellenartigen Form mit einer gleicher Amplitude in der Zelldurchlassrichtung ausgebildet sind.

3. Wabenfilter nach Anspruch 1 oder 2, worin alle Zellen in der wellenartigen Form mit gleicher Periode in der Zelldurchlassrichtung ausgebildet sind.

4. Wabenfilter nach einem der Ansprüche 1 bis 3, worin die Amplitude jeder der wellenförmigen Zellen 150 bis 350 % der Dicke jeder der Trennwände beträgt.

5. Wabenfilter nach einem der Ansprüche 1 bis 4, worin die Wellenlänge jeder der wellenförmigen Zellen 5 bis 9,5 Mal die Dicke jeder der Trennwände beträgt.

6. Wabenfilter nach einem der Ansprüche 1 bis 5, worin die anströmungsseitig offenen Querschnittsflächen der wellenförmigen Zellen größer sind als ihre abströmungsseitig offenen Querschnittsflächen.

7. Wabenfilter nach einem der Ansprüche 1 bis 6, worin die wellenförmigen Zellen aus einer Kombination aus abwechselnd angeordneten viereckigen und achteckigen Zellen zusammengesetzt sind.

8. Wabenfilter nach einem der Ansprüche 1 bis 7, worin der äußere Umfangsabschnitt der Wabenstruktur in einer konkaven/konvexen Form ausgebildet ist, die der wellenartigen Form der wellenförmigen Zellen entspricht.

9. Wabenfilter nach einem der Ansprüche 1 bis 8, worin der äußere Umfangsabschnitt der Wabenstruktur in einer dicken oder dünnen ebenen Form ausgebildet ist, die der wellenartigen Form der wellenförmigen Zellen entspricht.

10. Herstellverfahren für den Wabenfilter nach einem der Ansprüche 1 bis 9, wobei dieses Folgendes umfasst:
Einstellen einer Extrusionsgeschwindigkeit während der Extrusion eines Formmaterials, das ein keramisches Material zur Ausbildung von wellenförmigen Zellen enthält, sodass ein einziges Paar gegenüberliegender Oberflächen jeder Zelle eine wellenartige Form mit gleicher Wellenlänge in der Durchgangskanalrichtung aufweist.

## Revendications

1. Filtre en nid d'abeilles comprenant :
une structure en nid d'abeilles ayant un grand nombre d'alvéoles qui deviennent des passages pour un gaz d'échappement séparés par des parois de séparation et ayant de grandes et de petites surfaces transversales des alvéoles, et
des parties d'obstruction placées en variante au niveau des extrémités ouvertes du grand nombre d'alvéoles,
dans lequel le grand nombre d'alvéoles comprend des alvéoles de type ondulé ayant chacune une seule paire de surfaces en vis-à-vis ou de régions en vis-à-vis formées selon une forme de vague avec une longueur d'onde identique dans une direction de passage des alvéoles.

2. Filtre en nid d'abeilles selon la revendication 1, dans lequel les alvéoles de type vague sont formées selon la forme de vague avec une amplitude identique dans la direction de passage des alvéoles.

3. Filtre en nid d'abeilles selon la revendication 1 ou 2, dans lequel toutes les alvéoles sont formées selon la forme de vague avec un cycle identique dans la direction de passage des alvéoles.

4. Filtre en nid d'abeilles selon l'une quelconque des revendications 1 à 3, dans lequel l'amplitude de chaque alvéole de type vague représente de 150 à 350% de l'épaisseur de chacune des parois de séparation.

5. Filtre en nid d'abeilles selon l'une quelconque des revendications 1 à 4, dans lequel la longueur d'onde de chacune des alvéoles de type vague représente de 5 à 9,5 fois l'épaisseur de chacune des parois de séparation.

6. Filtre en nid d'abeilles selon l'une quelconque des revendications 1 à 5, dans lequel les surfaces transversales ouvertes du côté en amont des alvéoles de type vague sont plus grandes que ses surfaces transversales ouvertes du côté de la sortie.

7. Filtre en nid d'abeilles selon l'une quelconque des revendications 1 à 6, dans lequel les alvéoles de type vague sont constituées par une combinaison d'alvéoles quadrangulaires et octogonales disposées de manière alternée.

8. Filtre en nid d'abeilles selon l'une quelconque des revendications 1 à 7, dans lequel la partie périphérique externe de la structure en nid d'abeilles est formée selon une forme concave/convexe correspondant à la forme de vague des alvéoles de type vague.

9. Filtre en nid d'abeilles selon l'une quelconque des revendications 1 à 8, dans lequel la partie périphérique externe de la structure en nid d'abeilles est formée selon une forme plane épaisse ou mince correspondant à la forme de vague des alvéoles de type vague.

10. Procédé pour fabriquer le filtre en nid d'abeilles selon l'une quelconque des revendications 1 à 9, comprenant l'étape consistant à :
ajuster une vitesse d'extrusion pendant l'extrusion d'un matériau de formage contenant un matériau en céramique afin de former des alvéoles de type vague de sorte qu'une seule paire des surfaces en vis-à-vis de chaque alvéole a une forme de vague avec une longueur d'onde identique dans une direction du canal traversant.
